# EUROPÄISCHE PATENTSCHRIFT

(11) **EP 0 591 559 B1**
(45) Veröffentlichungstag und Bekanntmachung des Hinweises auf die Patenterteilung: **06.03.1996**
(21) Anmeldenummer: 92116579.1
(22) Anmeldetag: 28.09.1992
(51) Int. Cl.: B41C 1/05, B23K 26/00

(54) **Verfahren und Vorrichtung zum Gravieren von Rundschablonen**
Method and apparatus for engraving cylindrical printing screens
Méthode et appareillage de gravage de cylindres imprimeurs

(43) Veröffentlichungstag der Anmeldung: 13.04.1994
(73) Patentinhaber: Schablonentechnik Kufstein Aktiengesellschaft, A-6330 Kufstein (AT)
(72) Erfinder: Achreiner,Jakob, A-6361 Hopfgarten (AT)
(74) Vertreter: TER MEER - MÜLLER - STEINMEISTER & PARTNER

(56) Entgegenhaltungen:
- EP-A- 0 476 965
- WO-A-92/02368
- US-A- 4 998 260

## Beschreibung

Die Erfindung betrifft ein Verfahren zum Gravieren von Rundschablonen gemäß dem Oberbegriff des Patentanspruchs 1 sowie eine Vorrichtung zur Durchführung dieses Verfahrens gemäß dem Oberbegriff des Patentanspruchs 6. Ein derartiges Verfahren und eine derartige Vorrichtung wird z.B. in Dokument WO-A-9202368 beschrieben.

Bei der Herstellung einer Rundschablone geht man üblicherweise von einem metallischen Hohlzylinder aus, der an seiner äußeren Oberfläche mit einem organischen Lack dünn beschichtet ist und eine sehr geringe Wandstärke aufweist. Der metallische Hohlzylinder besitzt eine Vielzahl von kleinen und sehr eng benachbart zueinanderliegenden Durchgangsöffnungen, die durch den organischen Lack dicht verschlossen werden. Zur Erzeugung eines Musterbilds wird der metallische Hohlzylinder, der also in Form eines Metallsiebs vorliegt, in einer Vorrichtung, die einer Drehbank ähnlich ist, mit beiden Enden eingespannt und genau rundlaufend mitgenommen. Ein parallel zur Längsachse des Hohlzylinders herangeführter Laserstrahl wird durch einen achsparallel bewegbaren Ablenkspiegel so umgelenkt, daß er dann senkrecht zur Mantelfläche des Hohlzylinders verläuft. Dieser Laserstrahl wird mit Hilfe einer Linsenanordnung so fokussiert, daß ein Fokuspunkt sehr kleinen Durchmessers genau auf der Zylindermantelfläche zu liegen kommt. Wird der Laserstrahl eingeschaltet, so läßt sich der organische Lack entsprechend dem vorgegebenen Musterbild von der Mantelfläche des Hohlzylinders durch Verdampfen abtragen, wobei einerseits der Laserstrahl in Axialrichtung des Hohlzylinders geführt und der Hohlzylinder selbst gedreht wird. In den abgetragenen Lackbereichen, die auch als Musterbereiche bezeichnet werden können, liegen somit die Durchgangsöffnungen im Hohlzylinder frei, so daß sich durch sie in einem späteren Stadium viskose Mittel, z. B. eine Druckpaste, hindurchpressen lassen.

Zur Erzeugung des Laserstrahls wird üblicherweise ein Gas-Leistungslaser verwendet, welcher im allgemeinen Kohlendioxid als Lasermedium enthält. Wird ein derartiger Gaslaser abgeschaltet, so werden je nach Länge der Abschaltzeit unterschiedliche Energieverläufe der Laserstrahlung erhalten. Dabei hängt die Länge der Abschaltzeit im wesentlichen von der Lasergaszusammensetzung ab. Bei unkorrekter Wahl der Abschaltzeit besteht daher die erhebliche Gefahr, daß Musterbilder mit Kantenstrukturen entstehen, die hinsichtlich der Schärfe nicht mehr den heutigen Anforderungen genügen.

Andererseits wird die Energie der Laserstrahlung, die für die Abtragung der Lackschicht aufgewendet wird, stets ein wenig größer gewählt, als der Verdampfungsenergie für den Lack entsprechen würde. Die überschüssige Strahlungsenergie wird dabei aber von der unter dem Lack liegenden metallischen Sieboberfläche reflektiert. Dies führt dazu, daß der Gaslaser nicht mehr sicher geschaltet werden kann.

Ein Kohlendioxidlaser entsprechender Leistung wird meist über elektrodynamische Gleich- oder Wechselfelder angeregt. Im Falle einer Gleichstromanregung stehen die Elektroden im Gasstrom und es wird die Aussendung eines Laserstrahls durch Auf- bzw. Abschalten einer Gleichspannung von mehreren kV erzwungen. Im Falle einer Wechselfeldanregung sind die Elektroden parallel zur Gasströmung außerhalb der diese berandenden Glasröhren angeordnet und das Feld greift senkrecht zur Röhrenachse durch die Glasrohrwand hindurch, und zwar mit einer Frequenz von einigen hundert kHz bis 50 MHz.

Voraussetzung für den Laserprozeß ist es, daß das Lasergas Energie auf einem metastabilen Niveau speichern kann, was jedoch andererseits den Nachteil mit sich bringt, daß im Lasergas auch nach Abschalten der elektrischen Anregung latent Energie gespeichert bleibt, so daß insbesondere im vorliegenden Fall von der Oberfläche des Metallzylinders reflektierte Reststrahlung eine Entladung des metastabilen Energieniveaus selbst nach dem Abschalten der elektrischen Anregung bewirken kann. Ein sehr ungleichmäßiges Abschalten des Laserstrahls ist dann die Folge, so daß dadurch sehr ungenaue Gravurkanten erhalten werden.

Aber auch während der elektrischen Einschaltperiode des Lasers, also während der Zeitspanne der elektrischen Anregung, führen die genannten Rückreflexionen zu ungewollt hohen und sehr kurzen Pulsleistungen der Laserstrahlung, die u. U. eine Zerstörung der Oberfläche des Metallsiebs bewirken können. Auch beobachtet man pulsierende Änderungen der Breite der durch den fokussierten Laserstrahl erzeugten Gravurlinie. Da diese Erscheinungen nicht nur einen Qualitätsverlust der Gravur bewirken, sondern auch einen Festigkeitsverlust des Basissubstrats nach sich ziehen, bemüht man sich, sie zu unterbinden.

Der Erfindung liegt die Aufgabe zugrunde, das Verfahren der eingangs genannten Art zum Gravieren von Rundschablonen so weiterzubilden, daß qualitativ noch bessere Musterbilder, insbesondere mit noch schärferen Gravurkanten, erhalten werden. Ziel der Erfindung ist es darüber hinaus, eine geeignete Vorrichtung zur Durchführung des Verfahrens zu schaffen.

Die verfahrensseitige Lösung der gestellten Aufgabe ist im kennzeichnenden Teil des Patentanspruchs 1 beschrieben. Dagegen findet sich die vorrichtungsseitige Lösung der gestellten Aufgabe im kennzeichnenden Teil des Patentanspruchs 6. Vorteilhafte Ausgestaltungen der Erfindung sind den jeweils nachgeordneten Unteransprüchen zu entnehmen.

Ein Verfahren zum Gravieren von Rundschablonen mit Hilfe eines Laserstrahls, durch den eine auf der Oberfläche eines hohlzylindrischen, rotierenden Metallsiebs liegende Lackschicht in vorgegebenen Musterbereichen abgetragen wird, zeichnet sich dadurch aus, daß
- das Abtragen der Lackschicht innerhalb der Musterbereiche bei kontinuierlich eingeschaltetem Laserstrahl erfolgt,
- der Laserstrahl am Ende eines jeweiligen Musterbereichs innerhalb einer Zeitspanne von 12 µs bis 30 µs abgeschaltet wird, und
- am Metallsieb in den Laserstrahlengang zurückreflektierte Strahlung aus dem Laserstrahlengang ausgekoppelt wird.

Es hat sich gezeigt, daß durch die Kombination der obigen Maßnahmen Musterbilder mit sehr scharfer Kantenstruktur bzw. sehr genauen Gravurkanten entstehen, wenn Oberflächengeschwindigkeiten des rotierenden Metallsiebs gewählt werden, die im Bereich ≧ 2 m/s, maximal bei 12 bis 13 m/s, liegen. So wird durch den innerhalb eines Musterbereichs kontinuierlich eingeschalteten Laserstrahl eine einwandfreie Energiestabilisierung erzielt, so daß beim Abschalten des Laserstrahls am Rand der Musterstruktur die Energie immer von ihrem maximalen Wert abfällt, was zu einem abrupteren Energieübergang und damit zu einer schärferen Kantenstruktur führt. Die kurzen Abschaltzeiten im Bereich von 12 µs bis 30 µs sorgen andererseits für einen äußerst raschen Abfall der Energie des Laserstrahls, wodurch sich bei den gewählten Rotationsgeschwindigkeiten des hohlzylindrischen Metallsiebs keine sich nachteilig auswirkenden Strukturverwischungen ergeben können. Durch die Auskopplung der am Metallzylinder zurückreflektierten Strahlung wird darüber hinaus auch ein sicheres Abschalten des Lasers möglich, was ebenfalls zur Verbesserung der Gravurkanten beiträgt.

Die Zeitspanne zur Abschaltung des Laserstrahls wird in geeigneter Weise voreingestellt, und zwar durch Änderung der Lasergaszusammensetzung. Dies betrifft bei einem Kohlendioxidlaser die Gaskomponenten CO₂, N₂ und He. Werden sie z.B. zu 14 %, 18 % und 68 % gewählt, so liegt eine relativ langsame Gasmischung vor, bei der die Abschaltzeitspanne im Bereich von 25 bis 30 µs bei hundertprozentiger Laserleistung liegt. Dagegen weist eine schnellere Gasmischung bei 65 % Laserleistung und bei einer Zusammensetzung von 16 % CO₂, 4 % N₂ und 80 % He eine Abschaltzeitspanne im Bereich von 12 µs bis 15 µs auf.

Nach einer sehr vorteilhaften Ausgestaltung der Erfindung kann der Laserstrahl vor dem Erreichen des Endes des jeweiligen Musterbereichs um eine von seiner Abschaltzeitspanne abhängigen Zeitperiode früher abgeschaltet werden. Hierdurch läßt sich die Gravurkante etwas zurücknehmen, was insbesondere bei längeren Abschaltzeitspannen von Vorteil ist, um auf diese Weise die Abstände zwischen aufeinanderfolgenden Musterbereichen in Übereinstimmung mit dem vorgegebenem Musterbild zu halten, da im allgemeinen die Einschaltzeitspanne des Gaslasers nur ein Bruchteil der Abschaltzeitspanne entspricht und ansonsten die aufeinanderfolgenden Musterbereiche näher beieinander liegen würden. Auch hierdurch läßt sich die Qualität des Musterbilds erheblich verbessern.

Nach einer anderen vorteilhaften Ausgestaltung der Erfindung wird der Laserstrahl, der vorzugsweise eine Leistung von etwa 1 kW aufweisen kann, zur Auskopplung der zurückreflektierten Strahlung zunächst linear polarisiert, wonach er einen weiteren Polarisationsfilter passiert, bevor er in etwa zwei gleich große und senkrecht zueinander stehende Strahlkomponenten aufgeteilt wird, welche um 90 Grad gegeneinander phasenverschoben werden, bevor sie auf die Lackschicht auftreffen. Vorzugsweise wird bei dem erfindungsgemäßen Gravurverfahren eine Laseranordnung verwendet, bei der der Laserstrahl bereits linear polarisiert den Laser verläßt und in die weitere Strahlführung in diesem Zustand eintritt. Dort ist zusätzlich ein Polarisator vorgesehen, welcher die linear polarisierte Strahlung, die zur Bearbeitungsstelle gerichtet ist, je nach Bauart des Polarisators zu dieser Stelle hindurchtreten läßt oder nach dorthin umlenkt. Da die an der Bearbeitungsstelle zurückreflektierte Strahlung durch diesen Polarisator (Analysator) daran gehindert werden soll, wieder in den Laserresonator einzutreten, ist im nachfolgenden Verlauf des Laserstrahls ein Phasenverschiebesystem vorgesehen, welches zwei etwa gleich große und zueinander senkrecht stehende Komponenten der linear polarisierten Laserstrahlung bei jedem Durchtritt um etwa eine viertel Wellenlänge relativ zueinander in der Phasenlage verschiebt. Der Polarisator ist ferner in Bezug auf die Strahlrichtung und die Lage der Polarisationsebene der zur Bearbeitungsstelle hin gerichteten und aus dem Laser austretenden Strahlung in einer solchen Raumlage angeordnet, daß diese Strahlung möglichst ungeschwächt zur Bearbeitungsstelle hin gelangt. Diese letzte Bedingung gilt im übrigen für alle folgenden Bauelemente der Einrichtung, also auch für jene der Phasenverschiebeeinheit, die an dem Weiterleiten bzw. dem Transport der Laserstrahlung teilnehmen. Besonders gut können diese Forderungen dann erfüllt werden, wenn Bauelemente Verwendung finden, die aus dielektrischen Dünnschichten aufgebaut sind. Solche Bauelemente können ebenso für die Polarisation wie auch für die Transmission und Reflexion gezielt hergestellt werden und haben den Vorteil, daß ausgezeichnete Transmissions- und Reflexionsgrade dann erreicht werden, wenn sie in richtiger Raumlage bezüglich der Strahleinfallsrichtung und der Polarisationsrichtung angeordnet werden.

Das hinter dem Polarisator vorhandene Phasenverschiebesystem besteht aus mehreren Umlenkspiegeln, die einen unterschiedlichen Schichtaufbau aufweisen. Der erste Umlenkspiegel des Systems ist so angeordnet. daß die aus Strahlrichtung und Normalenrichtung zur Spiegelfläche gebildete Einfallsebene mit der Polarisationsebene des Laserstrahls einen endlich großen und vorzugsweise 45 Grad betragenden Azimutwinkel einschließt. Dadurch wird die Polarisationsrichtung des Laserstrahls in eine zur Einfallsebene parallele Lichtwelle (p-Welle) und eine hierzu senkrechte Lichtwelle (s-Welle) aufgespalten. Durch unterschiedliche Dicken der einzelnen Dünnschichten werden unterschiedliche Phasenverschiebungen der p-Welle und der s-Welle bei der Reflexion an den Umlenkspiegeln erreicht. Bei einem Ausführungsbeispiel wird ein Lambda-Viertel-Spiegel mit drei Null-Grad-Spiegeln kombiniert. Bei einer Reflexion am Lambda-Viertel-Spiegel wird die p-Welle relativ zur s-Welle zeitlich um 90 Grad Phasenwinkel, d. h. um eine viertel Wellenlänge, verschoben. Eine Reflexion an einem Null-Grad-Spiegel erfolgt so, daß überhaupt keine Phasenverschiebung zwischen p-Welle und s-Welle auftritt. Die geometrische oder bauliche Reihenfolge, in welcher die Null-Grad-Spiegel und der Lambda-Viertel-Spiegel angeordnet werden, ist ohne Belang. Anstelle eines Lambda-Viertel-Spiegels könnten auch zwei Lambda-Achtel-Spiegel vorgesehen werden, welche dann jeweils eine relative Phasenverlagerung der genannten Wellenzüge um ein Achtel der Wellenlänge verursachen, wodurch eine Gesamtverschiebung von wiederum einer viertel Wellenlänge erreicht wird.

Die Phasenverschiebeeinrichtung erzeugt aus dem linear polarisierten Laserstrahl einen zirkular oder ggf. einen elliptisch polarisierten Laserstrahl. Dieser wird über weitere Null-Grad-Reflektoren, die in beliebiger Anzahl vorgesehen sein können, auf die zu gravierende Schablonenoberfläche gelenkt und dort durch eine Optik fokussiert. Ein möglicherweise von der Metalloberfläche senkrecht zurückreflektierter Strahl durchläuft abermals die Phasenverschiebeeinrichtung und es erfolgt dann bei rückwärts gerichtetem Durchlaufen der Phasenverschiebeeinrichtung ein weiterer Versatz der Phasenlage der p-Welle relativ zur s-Welle um abermals 90 Grad Phasenwinkel bzw. um eine viertel Wellenlänge. Infolge der jetzt entstandenen 180 Grad Phasenverschiebung ist der rücklaufende Strahl wiederum linear polarisiert und seine Polarisationsebene ist um 90 Grad gegenüber der Polarisationsebene des zur Bearbeitungsstelle laufenden Strahls verdreht. Der Strahl mit dieser Polarisationsrichtung wird von dem Polarisator jetzt nicht mehr zum Laser zurückgeleitet sondern von diesem abgelenkt und damit daran gehindert, in den Laserresonator einzutreten.

Nach einem anderen Ausführungsbeispiel der Erfindung kann die Phasenverschiebeeinrichtung bzw. die die Schwingungsebene drehende Einrichtung im Strahlengang hintereinanderliegend auch eine im Brewsterwinkel angestellte dielektrische Planscheibe mit hoher Brechzahl sowie ein doppelbrechendes Kristallplättchen aufweisen.

Die Erfindung wird nachfolgend unter Bezugnahme auf die Zeichnung näher beschrieben. Es zeigen:
**Fig. 1** eine perspektivische Gesamtansicht einer Laser-Gravurvorrichtung,
**Fig. 2** eine Draufsicht auf eine der Fig. 1 ähnliche Vorrichtung,
**Fig. 3** die Vorrichtung mit einer Phasenverschiebeeinrichtung nach einem ersten Ausführungsbeispiel und
**Fig. 4** die Vorrichtung mit einer Phasenverschiebeeinrichtung nach einem zweiten Ausführungsbeispiel.

Die Erfindung wird nachfolgend anhand der Zeichnungen im einzelnen beschrieben.

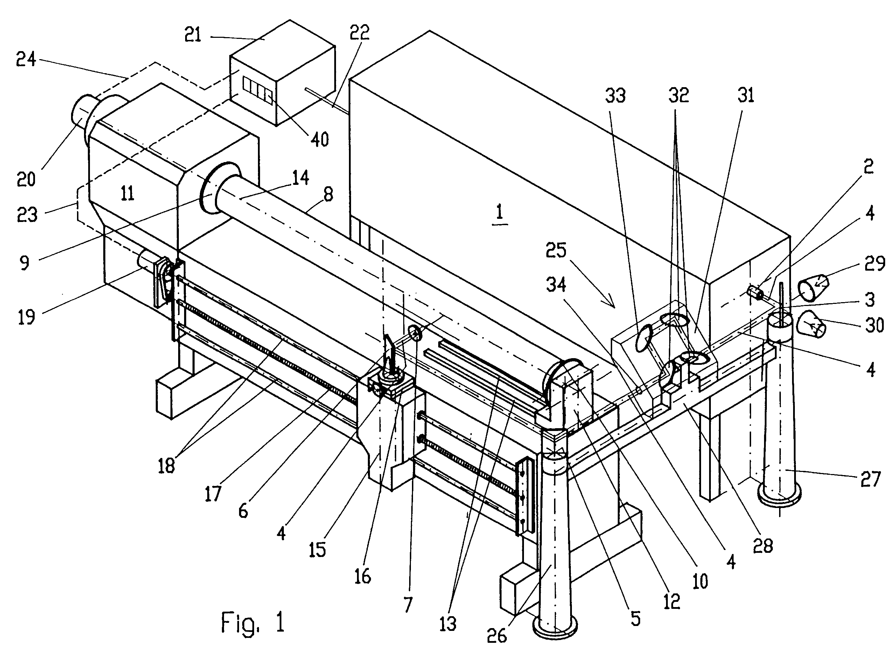

Die Fig. 1 zeigt eine erfindungsgemäße Vorrichtung mit einem Leistungslaser 1, der im vorliegenden Fall ein CO₂-Laser ist, und der über eine Austrittsöffnung 2 einen auf einen ersten Umlenkspiegel 3 auftreffenden Laserstrahl 4 ausgibt, der in Vertikalrichtung linear polarisiert ist. Durch den ersten Umlenkspiegel 3 wird der Laserstrahl 4 um 90 Grad umgelenkt und trifft nach Durchlaufen einer Phasenverschiebeeinrichtung auf einen zweiten Umlenkspiegel 5 auf, um erneut um 90 Grad umgelenkt zu werden, so daß erjetzt in einer zu seiner ursprünglichen Richtung entgegengesetzten Richtung verläuft. Über einen dritten Ablenkspiegel 6 erfolgt nochmals eine Ablenkung des Laserstrahls 4 um 90 Grad, und zwar in Richtung auf den Leistungslaser 1 zu. Dabei wird der nach dem dritten Ablenkspiegel 6 verlaufende Laserstrahl 4 mit Hilfe einer Fokussierungsoptik, im vorliegenden Fall mittels einer Linse 7, so fokussiert, daß sein Brennpunkt auf der äußeren Mantelfläche eines Hohlzylinders 8 zu liegen kommt, die z. B. mit einem organischen Lack dünn beschichtet ist. Der Hohlzylinder 8 besteht aus einem sehr dünnen und gleichmäßig perforierten Metallgitter und ist zwischen zwei drehbar gelagerten Kegelstummeln 9 und 10 gehalten. Der Kegelstummel 9 wird durch einen nicht dargestellten Antrieb in einem Spindelstock 11 in Drehung versetzt. Auch der Kegelstummel 10 ist drehbar gelagert, und zwar in einem Reitstock 12. Der Reitstock 12 kann auf Führungsbahnen 13 in Richtung einer Hohlzylinderachse 14 gegen den Hohlzylinder 8 gepreßt werden, wobei er dann den Hohlzylinder 8 gegen den Kegelstummel 9 drückt. Durch den so herbeigeführten Reibschluß werden der Hohlzyllnder 8 und der Kegelstummel 10 von der Drehbewegung des Kegelstummels 9 mitgenommen. Wegen des äußerst geringen Reibungswiderstands, welcher der im Reitstock 12 kugelgelagerte Kegelstummel 10 zu überwinden hat, und auch infolge der sehr konstanten Antriebsdrehzahl des Kegelstummels 9, genügen sehr geringe axiale Spannkräfte zwischen dem Hohlzylinder 8 und den Kegelstummeln 9 und 10, um den Hohlzylinder 8 schlupffrei und daher mit der Drehzahl des Kegelstummels 9 anzutreiben.

Der dritte Ablenkspiegel 6 und die Linse 7 sind auf einem in Richtung der Hohlzylinderachse 14 bewegbaren Bearbeitungstisch 15 (Schlitten) montiert. Genauer gesagt trägt der Bearbeitungstisch 15 einen Querschlitten 16, auf dem der dritte Ablenkspiegel 6 und die Linse 7 angeordnet sind und durch den eine genaue radiale Justierung des durch die Linse 7 erzeugten Brennpunkts auf der Oberfläche des Hohlzylinders 8 möglich ist. Wird der Bearbeitungstisch 15 mit Hilfe einer Spindel 17 entlang von Führungsstangen 18 in Richtung der Hohlzylinderachse 14 bewegt, und wird dabei gleichzeitig der Hohlzylinder 8 gedreht, so beschreibt der Brennpunkt der Linse 7 bzw. der im Brennpunkt fokussierte Laserstrahl 4 eine Schraubenlinie auf die Oberfläche des Hohlzylinders 8. Der Antrieb der Spindel 17 erfolgt durch einen Schrittmotor 19. Für die Ein- und Ausschaltung des vom Leistungslaser 1 abgegebenen Laserstrahls 4 als auch für die Schrittsteuerung des Schrittmotors 19 ist es erforderlich, zu jedem Zeitpunkt die genaue Drehlage des Hohlzylinders 8 zu kennen. Aus diesem Grunde ist mit der Welle des Kegelstummels 9 ein Drehlagendekoder 20 verbunden, der während einer Umdrehung des Hohlzylinders 8 mehrere tausend Impulse zur Drehlagenbestimmung abgibt. Unter Zuhilfenahme der ermittelten Drehlage des Hohlzylinders 8 und der Position des Bearbeitungstisches 15 wird ein elektronischer Speicher adressiert, in welchem ein gewünschtes Musterbild vorgespeichert ist. Der adressierte Wert gibt an, ob an der entsprechenden Position die Lackschicht auf dem Hohlzylinder 8 abgetragen werden soll oder nicht, also ob ein Einschalten des Lasers 1 erforderlich ist oder unterbleiben kann. Der elektronische Speicher befindet sich in einer Steuereinrichtung 21, die über Leitungen 22, 23 und 24 mit dem Laser 1, dem Schrittmotor 19 und dem Drehlagendekoder 20 verbunden ist.

Wie bereits erwähnt, befindet sich zwischen dem ersten Umlenkspiegel 3 und dem zweiten Umlenkspiegel 5 eine Phasenverschiebeeinrichtung, die das Bezugszeichen 25 trägt. Diese Phasenverschiebeeinrichtung 25 ist auf einem zwei Ständer 26 und 27 miteinander verbindenden Querbalken 28 montiert, wobei die Ständer 26, 27 die Umlenkspiegel 3 und 5 aufnehmen. Am Ständer 27 sind darüber hinaus zwei Strahlfänger 29, 30 montiert, die weiter unten noch genauer beschrieben werden. Ferner weist die Phasenverschiebeeinrichtung 25 ein Gehäuse 31 auf, in dessen Innern vier weitere Umlenkspiegel 32, 33 angeordnet sind, worauf ebenfalls noch eingegangen wird. An gegenüberliegenden Seiten des Gehäuses 31 befinden sich Durchgangsöffnungen 34 für den Strahldurchtritt.

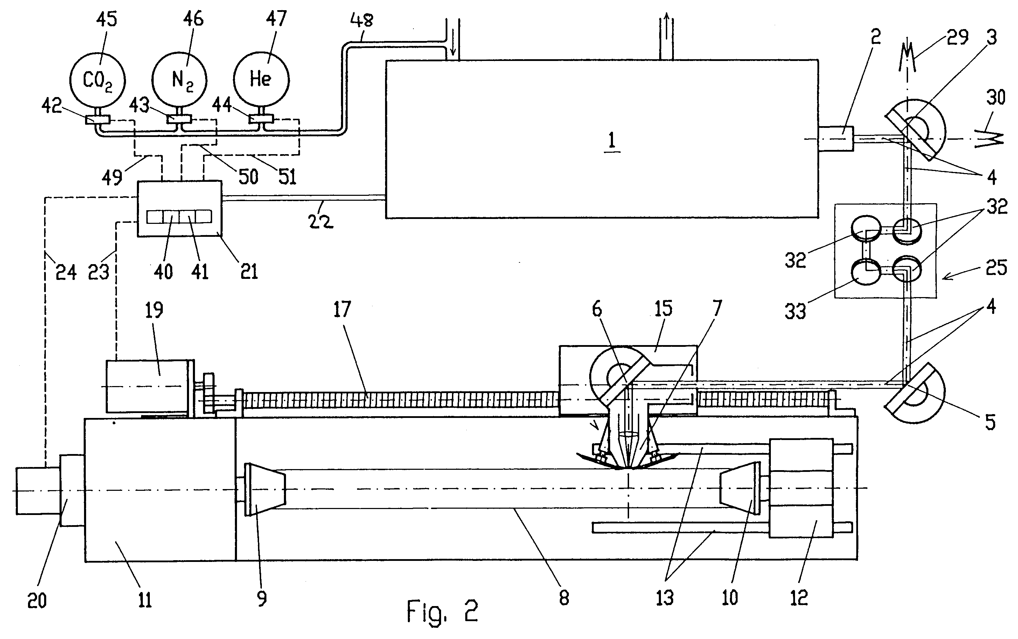

Die Fig. 2 zeigt eine der Fig. 1 ähnliche Vorrichtung zum Gravieren von Rundschablonen, jedoch wird hier der Bearbeitungstisch 15 an der dem Laser 1 zugewandten Seite des Hohlzylinders 8 geführt. Gleiche Elemente wie in Fig. 1 sind dabei mit den gleichen Bezugszeichen versehen und werden nicht nochmals beschrieben.

Die erwähnte Steuereinrichtung 21 weist gemäß Fig. 2 Einstellmittel 40 auf, beispielsweise eine Anzahl geeigneter Drucktasten 41, um bei entsprechender Betätigung eine gewünschte Gaszusammensetzung zum Befüllen des Leistungslasers 1 voreinzustellen, je nach gewünschter Abschaltzeitspanne des Laserstrahls 4. Entsprechende Dosierventile 42, 43, 44 lassen sich dabei unmittelbar in Abhängigkeit der Tastenbetätigung ansteuern, um aus Behältern 45, 46, 47 jeweils CO₂, N₂ und He über ein Leitungssystem 48 dem Laser 1 zuzuführen. Dazu ist die Steuereinrichtung 21 über elektrische Leitungen 49, 50, 51 mit den jeweiligen Dosierventilen 42, 43, 44 verbunden.

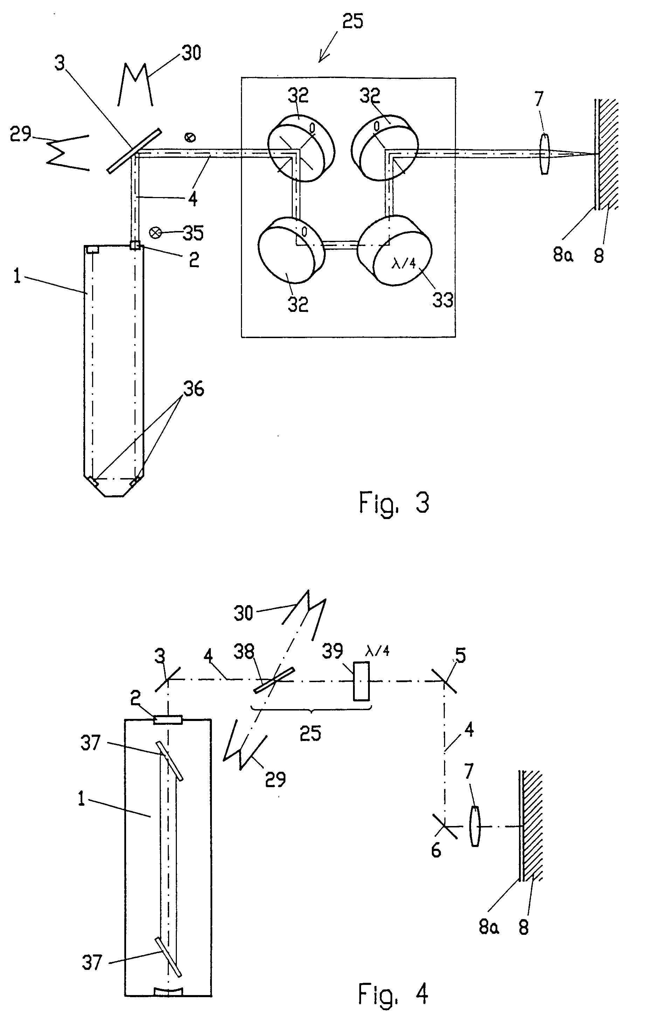

Die Fig. 3 zeigt das Prinzip der Auskopplung der am Metallzylinder 8 rückreflektierten Laserstrahlung. Der Laser 1 erzeugt dabei, wie bereits erwähnt, den in Vertikalrichtung linear polarisierten Laserstrahl 4, wobei in Fig. 3 die Vertikalrichtung mit dem Bezugszeichen 35 versehen ist. Die Polarisation des Laserstrahls 4 wird im Resonator des Lasers 1 durch ein Umlenkspiegelsystem 36 erhalten. Hierzu werden beispielsweise die Oberflächen dieser Umlenkspiegel aus Gold gefertigt, wobei zwei solcher Spiegel unter 45 Grad zur Strahlrichtung angeordnet werden. Gold hat eine geringfügig höhere Reflektivität für die s-Welle als für die p-Welle. Dadurch wird im Laserresonator die s-Welle bevorzugt. Dies ist ausreichend, um den Laserstrahl 4 bei 2 weitgehend vertikal polarisiert austreten zu lassen. Der Laserstrahl 4 trifft dann auf den Umlenkspiegel 3 auf, der als Dünnschichtpolarisator ausgebildet ist. Der Laserstrahl 4 weist, wie eben erwähnt, im wesentlichen eine vertikale Polarisationsrichtung auf, besteht also in Bezug auf die Einfallsebene des Dünnschichtpolarisators 3 nur aus einer s-Komponente, die von diesem Polarisator zu einem sehr hohen Prozentsatz reflektiert und kaum hindurchgelassen wird. Wegen der Möglichkeit, daß ein Leistungslaser doch noch einen, wenn auch geringen p-Strahlungsanteil emittiert, ist aus Sicherheitsgründen ein Strahlfänger 30 vorgesehen.

Der Dünnschichtpolarisator 3 besteht aus sieben bis neun dielektrischen Schichten, die abwechselnd aus Material mit niedrigerer Brechzahl (etwa n = 1,5) und Material mit hoher Brechzahl (etwa n = 2,4) gebildet werden. Die Dicke der Einzelschichten wählt man so, daß die wirksame optische Weglänge für die schräg in den Schichten verlaufenden Wellen ein Viertel Wellenlänge beträgt. Bei einer 10,6 µm Laserwellenlänge und einer Einfallsrichtung des Laserstrahls von 45 Grad auf die Oberfläche dieses Polarisators 3 entspricht dies einer Dicke von 1.06 µm für das Material mit einer Brechzahl von 2,4 und 1,56 µm für das Material mit einer Brechzahl von 1,5. Bei einem solchen Schichtaufbau wird dann die s-Komponente der polarisierten Strahlung zu etwa 99,8 % reflektiert, während die p-Komponente dieser Strahlung etwa zu dem gleichen Prozentsatz hindurchtreten kann. Es ist am Ort der Polarisationsanordnung zu beachten, daß die aus dem Laser austretende Laserstrahlung in Bezug auf die Einfallsebene des Polarisators 3 infolge seiner räumlichen Anordnung fast ausschließlich aus einer s-Komponente besteht. Daher wird diese Strahlung fast zur Gänze reflektiert und ebenso weitgehend zur Phasenverschiebeeinheit 25 gelenkt. Hier trifft die Laserstrahlung auf einen ersten Umlenkspiegel 32, der räumlich so angeordnet ist, daß die Polarisationsrichtung des Laserstrahls 4 im Bezug auf die nunmehr vorliegende Einfallsebene des Strahls gleich große p- und s-Komponenten aufweist. Dieser erste Umlenkspiegel 32 ist aber sonst so beschaffen, daß keine relative zeitliche Verzögerung zwischen p- und s-Wellen zustande kommt. Gleiches gilt für die beiden anderen in der Phasenverschiebeeinheit 25 vorgesehenen Umlenkspiegel 32. Diese Umlenkspiegel 32 weisen, wie schon im Zusammenhang mit den Polarisator 3 erläutert, eine hohe Reflektivität auf. Auch hier wird die hohe Reflektivität und die Null-Verlagerung zwischen p- und s-Komponente der Laserstrahlung mit dielektrischen Dünnschichten in Mehrfachanordnung und von genau definierter Dicke erreicht.

Der Umlenkspiegel 33 ist bezüglich der Dicke der dielektrischen Mehrfachschichten so gestaltet, daß eine relative Phasenverlagerung zwischen p- und s-Komponente des Laserstrahls 4 in der Größe von 90 Grad, also um eine viertel Wellenlänge, auftritt. Die Zahl der Schichten wird stets so groß gewählt, daß durch die von den einzelnen Schichten erzwungene Überlagerung der reflektierten bzw. transmittierten Wellen eine hohe Summenreflektivität erreicht wird. Bei beiden Umlenkspiegeln 32 und 33 kann insbesondere als letzte Reflexionsfläche eine metallische Schicht gewählt werden. Dies ist auch der Fall, wenn der Spiegelgrundkörper aus Metall besteht, was über dies den Vorteil einer intensiven Wärmeableitung hat.

Der Laserstrahl 4 tritt aus der Phasenverschiebeeinrichtung 25 als zirkular polarisierter Strahl aus und trifft dann über die fokussierende Optik 7 auf die zu gravierende Schablone auf. Diese Schablone besteht, wie bereits gesagt, aus einer dünnen Lackschicht 8a und einem darunter liegenden dünnwandigen Metallzylinder 8. Die Lackschicht 8a wird durch den Laserstrahl 4 verdampft, wobei Strahlenergie aufgebraucht wird. Da aber aus Gründen einer sicheren Abtragung der Lackschicht 8a stets mehr Strahlenergie zur Verfügung gestellt werden muß, als unbedingt zum Abtragen nötig ist, wird ein Teil der Laserstrahlung die metallische Oberfläche treffen und von dieser infolge ihrer hohen Reflektivität größtenteils wieder zurückgesendet werden. Sofern diese Strahlung durch kleine Unebenheiten so gestreut wird, daß sie nicht mehr kollinear mit der ursprünglichen Strahlrichtung zusammenfällt, ist dies ohne Bedeutung für eine einwandfreie Prozeßausführung. Jene Strahlungsanteile aber, welche genau mit der alten Strahlungsrichtung zusammenfallen, durchlaufen wiederum die Phasenverschiebeeinrichtung 25. Festzuhalten ist zunächst, daß die genau senkrecht von einer Metalloberfläche reflektierte Strahlung keine wie immer geartete Phasenverschiebung zwischen der ursprünglichen p- und s-Komponente erleidet. Dies bedeutet, daß die ursprüngliche 90-Grad-Phasenverschiebung auch bei dem Rücklauf der Reststrahlung bis zum Umlenkspiegel 32 in der Phasenverschiebeeinrichtung 25 erhalten bleibt. Hier wird nun abermals eine Phasenverschiebung in gleicher zeitlicher Richtung und Größe, also um 90 Grad, durch den Umlenkspiegel 33 erzwungen. Die nun weiter zurücklaufende Laserstrahlung weist dann eine Phasenverschiebung von insgesamt 180 Grad zwischen p- und s-Komponenten auf. Dies bedeutet, daß die Strahlung wiederum linear polarisiert ist und die Polarisationsebene gegenüber ihrer ursprünglichen Lage eine Drehung von 90 Grad erfahren hat. Der rücklaufende, die Phasenverschiebeeinrichtung 25 verlassende Strahl steht nun senkrecht auf der Polarisationsebene der ursprünglich vom Laser ausgesandten Strahlung. Aus diesem Grunde ist die rücklaufende Strahlung in Bezug auf die Einfallsebene des Dünnschichtpolarisators 3 eine p-Welle, wobei diese vom Dünnschichtpolarisator 3 nicht reflektiert sondern hindurchgelassen wird. Sie trifft dann auf einen gekühlten Strahlfänger 29 auf, welcher die Strahlungsenergie schluckt und in Abwärme umsetzt. Zweckmäßig ist der Strahlfänger 29 mit einer möglichst nicht reflektierenden bzw. schwarzen Oberfläche ausgerüstet und z. B. durch Wasser gekühlt.

Die Fig. 4 zeigt eine andere Ausführungsform der Vorrichtung zur Auskopplung zurückgestreuter Strahlung. Gleiche Komponenten wie in Fig. 3 sind dabei mit den gleichen Bezugszeichen versehen. Die Polarisierung der Laserstrahlung 4 erfolgt hier mittels zweier Brewsterfenster 37 im Innern des Resonators des Lasers 1. Nach Austritt der Laserstrahlung aus dem Laser 1 durch das Auskoppelfenster 2 wird der Laserstrahl 4 über einen ersten Umlenkspiegel 3 geführt, der keine Phasenverlagerung zwischen den Komponenten der linear polarisierten Strahlung bewirkt, und weiter durch eine im Brewsterwinkel angestellte dielektrische Planscheibe 38 mit hoher Brechzahl gesendet. In der weiteren Folge durchläuft der Laserstrahl 4 ein doppelbrechendes Kristallplättchen 39, welches eine relative Phasenverschiebung von 90 Grad, also von einem Viertel der Wellenlänge, zwischen zwei gleich großen und zueinander rechtwinkligen Komponenten bewirkt. Es sind dies die Komponenten des ordentlichen und des außerordentlichen Strahls. Diese können dann gleich groß gewählt werden, wenn der Kristall gegenüber der Polarisationsrichtung des Laserstrahls 4 die richtige Drehlage aufweist. Die relative Verlagerung der beiden Strahlkomponenten ist dann nurmehr von der Länge des optischen Weges durch den Kristall 39 und der Art des Kristalls abhängig, und es wird daher die Länge des Kristalls 39 so groß gewählt, daß die gewünschte Phasenverschiebung zustande kommt. Der Laserstrahl 4 ist nach dem ersten Durchlauf durch den Kristall 39 zirkular polarisiert und nach dem zweiten Durchlauf durch diesen oder besser nach dem Rücklauf infolge der dann erfolgten zweiten, gleich großen und gleich gerichteten Verlagerung wiederum linear polarisiert. Die Polarisationsrichtung steht dann auf der Polarisationsrichtung beim ersten Durchlauf senkrecht.

Im weiteren Strahlenverlauf trifft der Laserstrahl 4 wiederum auf die im Brewsterwinkel angestellte dielektrische Planscheibe 38, welche nun die rücklaufende Strahlung infolge ihrer anderen Polarisationsrichtung weitgehend in den Strahlfänger 29 reflektiert, so daß nur geringe Anteile der Strahlung in den Laserresonator gelangen, wo sie wegen der hier angeordneten weiteren zwei Brewsterfenster 37 und wegen ihrer Polarisationsrichtung keine Laseraktivität auslösen können. Um die Reflektivität der Planscheibe 38 zu erhöhen, kann diese mit einer Dünnschicht oder mit einem System aus mehreren Dünnschichten belegt sein.

Es sei noch darauf hingewiesen, daß anstelle des gezeigten Dünnfilmpolarisators 3 oder des zur Polarisation benutzten Brewsterfensters 38 ein dichroitischer, oder bei relativ langwelliger Laserstrahlung, ein Drahtgitterpolarisator zum Einsatz kommen kann. Als Phasenverschiebeeinrichtung 25 kann auch ein Fresnel-Rhombus, auch Fresnellsches Parallelepiped genannt, Verwendung finden.

## Patentansprüche

1. Verfahren zum Gravieren von Rundschablonen mit Hilfe eines Laserstrahls (4), durch den eine auf der Oberfläche eines hohlzylindrischen, rotierenden Metallsiebs (8) liegende Lackschicht (8a) in vorgegebenen Musterbereichen abgetragen wird, wobei
- das Abtragen der Lackschicht (8a) innerhalb der Musterbereiche bei kontinuierlich eingeschaltetem Laserstrahl (4) erfolgt, **dadurch gekennzeichnet**, daß
- der Laserstrahl (4) am Ende eines jeweiligen Musterbereichs innerhalb einer Zeitspanne von 12 µs bis 30 µs abgeschaltet wird und
- am Metallsieb (8) in den Laserstrahlengang zurückreflektierte Strahlung aus dem Laserstrahlengang ausgekoppelt wird.

2. Verfahren nach Anspruch 1, **dadurch gekennzeichnet**, daß die Zeitspanne zur Abschaltung des Laserstrahls (4) durch Verändern einer Lasergaszusammensetzung voreingestellt wird.

3. Verfahren nach Anspruch 1 oder 2, **dadurch gekennzeichnet**, daß der Laserstrahl (4) vor dem Erreichen des Endes des jeweiligen Musterbereichs um eine von seiner Abschaltzeitspanne abhängigen Zeitperiode früher abgeschaltet wird.

4. Verfahren nach Anspruch 1, 2 oder 3, **dadurch gekennzeichnet**, daß das Abtragen der Lackschicht (8a) mit einer Laserleistung von etwa 1 kW erfolgt.

5. Verfahren nach Anspruch 1, 2, 3 oder 4, **dadurch gekennzeichnet**, daß der Laserstrahl (4) zur Auskopplung der zurückreflektierten Strahlung zunächst linear polarisiert wird, einen weiteren Polarisationsfilter (3, 38) passiert und danach in etwa zwei gleich große und senkrecht zueinander stehende Strahlkomponenten aufgeteilt wird, welche um 90 Grad gegeneinander phasenverschoben werden, bevor sie auf die Lackschicht (8a) auftreffen.

6. Vorrichtung zur Durchführung des Verfahrens nach einem der Ansprüche 1 bis 5, mit einer an sich bekannten Bearbeitungsstation, die wenigstens eine Lagereinrichtung (9, 10) zur stirnseitigen Lagerung des Metallsiebs (8), eine Antriebseinrichtung zur Drehung des Metallsiebs (8) um seine Zylinderachse (14), einen parallel zur Zylinderachse (14) bewegbaren Bearbeitungstisch (15) mit einem Ablenkspiegel (6), einen Gaslaser (1) zur Erzeugung eines Laserstrahls (4), der über den Ablenkspiegel (6) ablenkbar ist, und eine Steuereinrichtung (21) zur Steuerung der Antriebseinrichtung, des Transports des Bearbeitungstisches (15) sowie des Gaslasers (1) enthält, **dadurch gekennzeichnet**, daß
- der Gaslaser (1) einen linear polarisierten Laserstrahl (4) aussendet, und
- im Strahlengang zwischen einem Polarisator (3, 38) und dem Ablenkspiegel (6) eine Einrichtung (25) angeordnet ist, die die Schwingungsebene der am Metallsieb (8) zurückreflektierten Strahlung gegenüber derjenigen des vom Gaslaser (1) ausgesandten Laserstrahls (4) um 90 Grad dreht.

7. Vorrichtung nach Anspruch 6, **dadurch gekennzeichnet**, daß der Gaslaser (1) parallel zur Zylinderachse (14) steht, zwei Umlenkspiegel (3, 5) zur Umlenkung des Laserstrahls (4) zum Ablenkspiegel (6) vorhanden sind, und die die Schwingungsebene drehende Einrichtung (25) zwischen den beiden Umlenkspiegeln (3, 5) angeordnet ist.

8. Vorrichtung nach Anspruch 6, **dadurch gekennzeichnet**, daß der vom Laserstrahl (4) zuerst beaufschlagte Umlenkspiegel (3) als Dünnschichtpolarisator ausgebildet ist und die die Schwingungsebene drehende Einrichtung (25) vier im Strahlengang hintereinander angeordnete weitere Umlenkspiegel (32, 32, 33, 32) aufweist, von denen einer (33) als λ/4 Phasenschieber ausgebildet ist.

9. Vorrichtung nach Anspruch 6, **dadurch gekennzeichnet**, daß die die Schwingungsebene drehende Einrichtung (25) im Strahlengang hintereinanderliegend eine im Brewsterwinkel angestellt dielektrische Planscheibe (38) mit hoher Brechzahl sowie ein doppelbrechendes Kristallplättchen (39) aufweist.

10. Vorrichtung nach einem der Ansprüche 6 bis 8, **dadurch gekennzeichnet**, daß die die Schwingungsebene drehende Einrichtung (25) auf einem die Umlenkspiegel (3, 5) miteinander verbindenden Träger (8) montiert ist.

11. Vorrichtung nach einem der Ansprüche 5 bis 9, **dadurch gekennzeichnet**, daß die Steuereinrichtung (21) Einstellmittel (40) zur Einstellung der Gaszusammensetzung des Gaslasers (1) enthält.

## Claims

1. A method for etching round templates by the aid of a laser beam (4) eroding a lacquer layer (8a) in predetermined pattern regions positioned on the outer surface of a hollow cylindrical rotating metal screen (8), said laser bem (4) is continuously energized within said pattern regions to erode said lacquer layer (8a), **characterized by** the following steps:
- deenergizing the laser beam (4) at the end of each pattern region within a time interval of 12 µs to 30 µs; and
- decoupling from the laser beam path radiation reflected from the metal screen (8) into said laser beam path.

2. The method as claimed in claim 1, **characterized in that** the time interval for deenergization of the laser beam (4) is preset by alteration of a laser gas composition.

3. The method as claimed in claim 1 or 2, **characterized in that** the laser beam (4) is deenergized prior to reaching the end of each pattern region by a period of time dependent upon its deenergization time interval.

4. The method as claimed in claim 1, 2 or 3, **charactrized in that** erosion of the lacquer layer (8a) occurs with a laser power of about 1 kW.

5. The method as claimed in claim 1, 2, 3 or 4, **characterized by** linearly polarizing the laser beam (4) and dividing said polarized beam by a polarization filter (3, 38) into a pair of equal beam components for decoupling said reflected radiation, said components are perpendicular to one another and phase-shifted relative to one another by 90 degrees before they impinge upon the lacquer layer (8a).

6. Apparatus for carrying out the method according to one of the claims 1 to 5, comprising a known working station having at least a supporting means (9, 10) for supporting the metal screen (8) at its ends, a driving means for rotating the metal screen (8) about its cylinder axis (14), a support (15) to be moved parallel to the cylinder axis (14) and carrying a deflector mirror (6), a gas laser (1) for emitting a laser beam (4) to be deflected by said deflecting mirror (6), and a control means (21) for controlling the driving means, the movement of the support (15) and the gas laser (1), **characterized in that**
- the gas laser (1) generates a linear polarized laser beam (4); and
- a means (25) is arranged in the beam path between a polarizer (3, 38) and said deflector mirror (6) for rotating the plane of oscillation of radiation reflected from the metal screen (8) by 90 degrees with respect of the corresponding plane of the laser beam (4) emitted from said gas laser (1).

7. The apparatus as claimed in claim 6, **characterized in that** the gas laser (1) is parallel to said cylinder axis (14), that two further deflecting mirrors (3, 5) are provided for deflecting the laser beam (4) to said deflecting mirror (6), and that said means (25) for rotating the oscillation plane is arranged between said further deflecting mirrors (3, 5).

8. The apparatus as claimed in claim 6, **characterized in that** the deflecting mirror (3) which first deflects the laser beam (4) is a thin-layer polarizer, and said oscillation plane rotating means (25) comprises four addtional deflecting mirrors (32, 32, 33, 32) arranged in succession in the laser beam path, one of said additional deflecting mirrors (33) comprising a λ/4 phase shifter.

9. The apparatus as claimed in claim 6, **characterized in that** said oscillation plane rotating means (25) comprises a plane dielectric plate (38) of high refractive index set at the Brewster angle and a birefringent small crystal plate (39) arranged in succession in the laser beam path.

10. The apparatus as claimed in one of the claims 6 to 8, **characterized in that** said oscillation plane rotating means (25) is mounted on a cross beam (8) connecting said further deflecting mirrors (3, 5) with each other.

11. The apparatus as claimed in on of the claims 5 to 9, **characterized in that** the control means (21) comprises setting means (40) for adjusting the gas composition of said gas laser (1).

## Revendications

1. Procédé de gravage de cylindres imprimeurs, à l'aide d'un faisceau laser (4), au moyen duquel une couche de laque (8a), située sur la surface d'un tamis métallique (8) cylindrique creux, en rotation, est enlevée dans des zones prédéterminées du modèle,
- l'enlèvement de la couche de laque (8a) s'effectuant à l'intérieur des zones du modèle avec un faisceau laser (4) mis en service de façon continue,
caractérisé en ce que
- le faisceau laser (4) est mis hors service à l'achèvement d'une zone de modèle spécifique, dans un intervalle de temps allant de 12 µs à 30 µs, et en ce que
- le rayonnement réfléchi en retour sur le tamis métallique (8) sur le trajet du faisceau laser est découplé hors du trajet du faisceau laser.

2. Procédé selon la revendication 1, caractérisé en ce que l'intervalle de temps de mise hors service du faisceau laser (4) est préréglé par modification de la composition du gaz du laser.

3. Procédé selon la revendication 1 ou 2, caractérisé en ce que le faisceau laser (4), avant que l'on atteigne la fin de la zone de modèle respective, est mis hors service en avence pendant une période de temps fonction de l'intervalle de temps de mise hors service.

4. Procédé selon la revendication 1, 2 ou 3, caractérisé en ce que l'enlèvement de la couche de laque (8a) s'effectue avec une puissance laser d'environ 1 kW.

5. Procédé selon la revendication 1, 2, 3 ou 4, caractérisé en ce que le faisceau laser (4) pour assurer le découplage du rayonnement réfléchi en retour est d'abord polarisé de façon linéaire, passe dans un autre filtre de polarisation (3, 38), puis est subdivisé en deux composantes de faisceau, sensiblement de même valeur et perpendiculaires l'une par rapport à l'autre, et qui sont déphasées de 90 degrés l'une par rapport à l'autre, avant de venir frapper la couche de laque (8a).

6. Dispositif pour mettre en oeuvre le procédé selon l'une des revendications 1 à 5 avec un poste d'usinage, connu en soi, qui comporte au moins un dispositif de tourillonnement (9, 10), destiné à constituer un palier de tourillonnement frontal du tamis métallique (8), un dispositif d'entraînement destiné à assurer la rotation du tamis métallique (8) autour de son axe de cylindre (14), une table d'usinage (15) susceptible de se déplacer parallèlement à l'axe de cylindre (14) avec un miroir de déviation (6), un laser à gaz (1) destiné à produire un faisceau laser (4) susceptible d'être dévié par l'intermédiaire du miroir de déviation (6) et un dispositif de commande (21) destiné à commander le dispositif d'entraînement, le transport de la table d'usinage (15), ainsi que le laser à gaz (1), caractérisé en ce que
- le laser à gaz (1) émet un faisceau laser (4) polarisé de façon linéaire et
- sur le trajet du faisceau, entre un polariseur (3, 38) et le miroir de déviation (6), est disposé un dispositif (25) qui fait tourner de 90 degrés le plan de vibration du rayonnement réfléchi en retour sur le tamis métallique (8) par rapport à celui du faisceau laser (4) émis par le laser à gaz (1).

7. Dispositif selon la revendication 6, caractérisé en ce que le laser à gaz (1) est parallèle à l'axe de cylindre (14), en ce qu'il comporte deux miroirs de renvoi (3, 5) pour dévier le faisceau laser (4) vers le miroir de déviation (6), et en ce que le dispositif (2) faisant tourner le plan d'oscillation est disposé entre les deux miroirs de renvoi (3, 5).

8. Dispositif selon la revendication 6, caractérisé en ce que le miroir de renvoi (3) qui est d'abord frappé par le faisceau laser (4) est réalisé sous la forme de polariseur à couche mince, et le dispositif (25) faisant tourner le plan d'oscillation comporte quatre miroirs de renvoi (32, 32, 33, 32) supplémentaires disposés les uns derrière les autres sur le trajet du faisceau, dont l'un (33) est réalisé sous forme de déphaseur λ/4.

9. Dispositif selon la revendication 6, caractérisé en ce que le dispositif (25) faisant tourner le plan d'oscillation comporte sur le trajet du faisceau, placés l'un derrière l'autre, un disque plan (38) diélectrique réglé selon l'angle de Brewster, et à indice de réfraction élevé, ainsi qu'une plaquette de cristal (39) à double indice de réfraction.

10. Dispositif selon l'une des revendications 6 à 8, caractérisé en ce que le dispositif (25) faisant tourner le plan d'oscillation est monté sur un support (8) reliant ensemble les miroirs de renvoi (3, 5).

11. Dispositif selon l'une des revendications 5 à 9, caractérisé en ce que le dispositif de commande (21) contient des moyens de réglage (40) destinés à régler la composition du gaz de laser (1).
